# EUROPEAN PATENT SPECIFICATION

(11) **EP 2 443 541 B1**
(45) Date of publication and mention of the grant of the patent: **19.04.2017**
(21) Application number: 10790080.5
(22) Date of filing: 15.06.2010
(51) Int. Cl.: G06F 3/048, G06F 3/0486, G06F 3/0488, G06F 3/0482

(54) **MOBILE COMMUNICATIONS DEVICE USER INTERFACE**
BENUTZEROBERFLÄCHE FÜR EIN MOBILKOMMUNIKATIONSGERÄT
INTERFACE UTILISATEUR POUR UN DISPOSITIF DE COMMUNICATIONS MOBILES

(30) Priority: 15.06.2009 US 484799
(43) Date of publication of application: 25.04.2012
(73) Proprietor: Microsoft Technology Licensing, LLC, Redmond, WA 98052 (US)
(72) Inventor: FRIEDMAN, Jonathan D., Washington 98052-6399 (US); KRUZENISKI, Michael J., Washington 98052-6399 (US); WILSON, Brian M., Washington 98052-6399 (US); SMUGA, Michael A., Washington 98052-6399 (US); APFEL, Darren A., Washington 98052-6399 (US); HOFFMAN, Nell H., Washington 98052-6399 (US)
(74) Representative: Fischer, Michael Maria
(86) International application number: PCT/US2010/038730
(87) International publication number: WO 2010/148030

(56) References cited:
- KR-A- 20070 036 114
- KR-A- 20070 098 337
- US-A1- 2007 273 663
- US-A1- 2009 037 413
- US-A1- 2009 070 695

## Description

### BACKGROUND

Mobile communication devices (e.g., wireless phones) have become an integral part of everyday life. However, the form factor employed by conventional mobile communications devices is typically limited to promote mobility of the mobile communications device.

For example, the mobile communications device may have a relatively limited amount of display area when compared to a conventional desktop computer, e.g., a PC. Therefore, conventional techniques used to interact with a desktop computer may be inefficient when employed by a mobile communications device. For example, it may be difficult to select multiple items of content using convention techniques on a mobile communications device that has a limited amount of display area.

US 2009/0070695 discloses a method of storing and executing contents of a terminal which includes displaying a container to store contents on a screen, selecting a content and storing the content in the container, displaying the stored content and an application corresponding thereto if the container is selected, and executing the corresponding content if the specific content and an application corresponding thereto are selected.

### SUMMARY

The invention provides a method, a computer-readable medium, and a mobile communications device as claimed hereinafter.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.
FIG. 1 is an illustration of an example implementation of a mobile communications device in accordance with one or more embodiments of devices, features, and systems for mobile communications.
FIG. 2 is an illustration of a system in an example implementation that shows a gesture that is used to collect content in the portion of the user interface of FIG. 1.
FIG. 3 is an illustration of a system in an example implementation in which content is shown that is accepted into a portion of FIG. 2.
FIG. 4 is a flow diagram depicting a procedure in an example implementation in which a portion is output in a user interface that is configured to accept content and then perform an action involving each of the content.
FIG. 5 is a flow diagram depicting a procedure in an example implementation in which a user interface is output having a portion that is configured to accept content and usable to automatically form a communication without further user interaction.
FIG. 6 illustrates various components of an example device that can be implemented in various embodiments as any type of a mobile device to implement embodiments of devices, features, and systems for mobile communications.

### DETAILED DESCRIPTION

### Overview

Mobile communications devices typically have a small form factor to aide mobility of the mobile communications device. For example, the mobile communications device (e.g., a mobile phone) may be configured with a relatively minimal amount of display area and limited input devices (e.g., a keypad) so that the device may be easily transported. Consequently, traditional techniques used to interact with a conventional computer (e.g., a desktop PC) may be frustrating when used in conjunction with a mobile communications device.

For instance, selection and sharing of content (e.g., photos, video, and so on) on a mobile communications device may be difficult using traditional techniques due to the limitations of the small form factor described above. Consequently, traditional mobile communications devices were configured to interact with a single item of content at a time.

A mobile communications device user interface is described. In an implementation, a portion of a user interface is configured as a "bucket" to allow a user to drag-and-drop multiple items of content into it. The portion may be persisted between applications by an operating system such that a user may navigate between applications and store items of content from the applications using the portion. Actions may then be applied to the content that has been accepted in the bucket as a whole, such as to form a communication, a playlist, and so on, further discussion of which may be found in relation to the following sections.

In the following discussion, a variety of example implementations of a mobile communications device (e.g., a wireless phone) are described. Additionally, a variety of different functionality that may be employed by the mobile communications device is described for each example, which may be implemented in that example as well as in other described examples. Accordingly, example implementations are illustrated of a few of a variety of contemplated implementations. Further, although a mobile communications device having one or more modules that are configured to provide telephonic functionality are described, a variety of other mobile devices are also contemplated, such as personal digital assistants, mobile music players, dedicated messaging devices, portable game devices, netbooks, and so on.

### Example Implementations

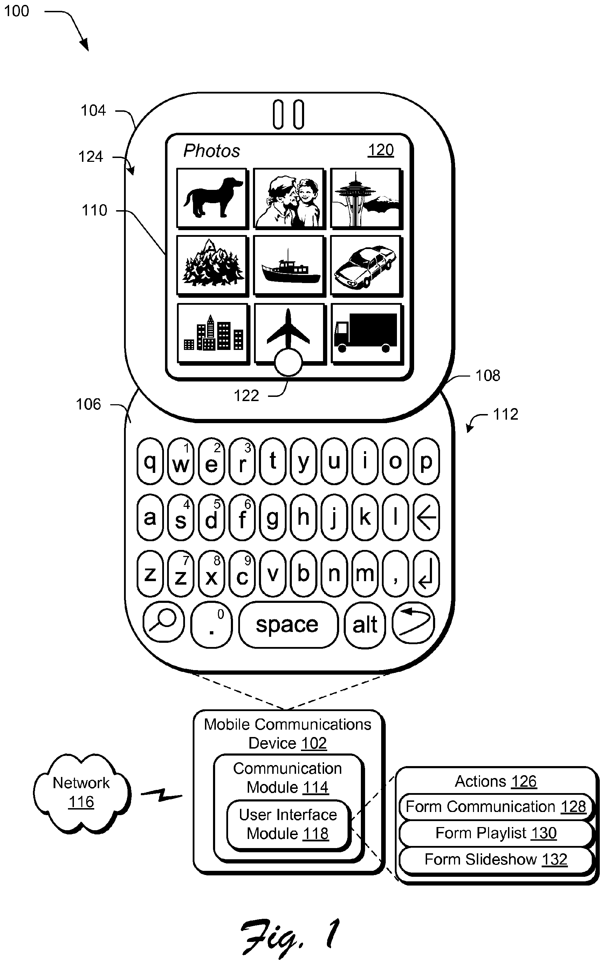

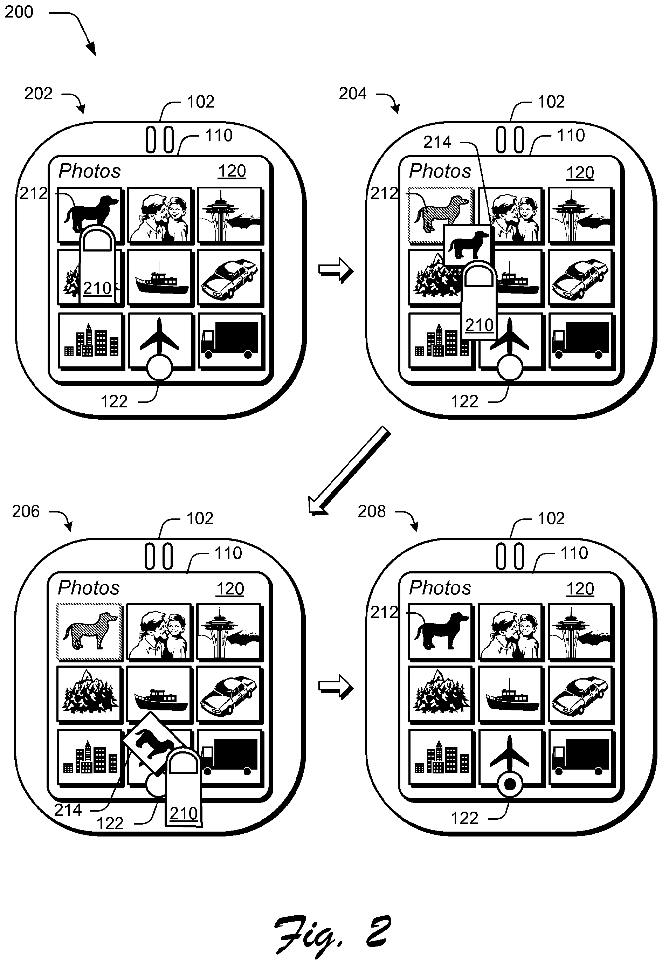

FIG. 1 is an illustration of an example implementation 100 of a mobile communications device 102 in accordance with one or more embodiments of devices, features, and systems for mobile communications. The mobile communications device 102 is operable to assume a plurality of configurations, examples of which include a configuration as illustrated in FIG. 1 in which the mobile communications device 102 is "open" and a configuration in which the mobile communications device 102 is "closed" as illustrated in FIGS. 2-3.

The mobile communications device 102 is further illustrated as including a first housing 104 and a second housing 106 that are connected via a slide 108 such that the first and second housings 104, 106 may move (e.g., slide) in relation to one another. Although sliding is described, it should be readily apparent that a variety of other movement techniques are also contemplated, e.g., a pivot, a hinge and so on.

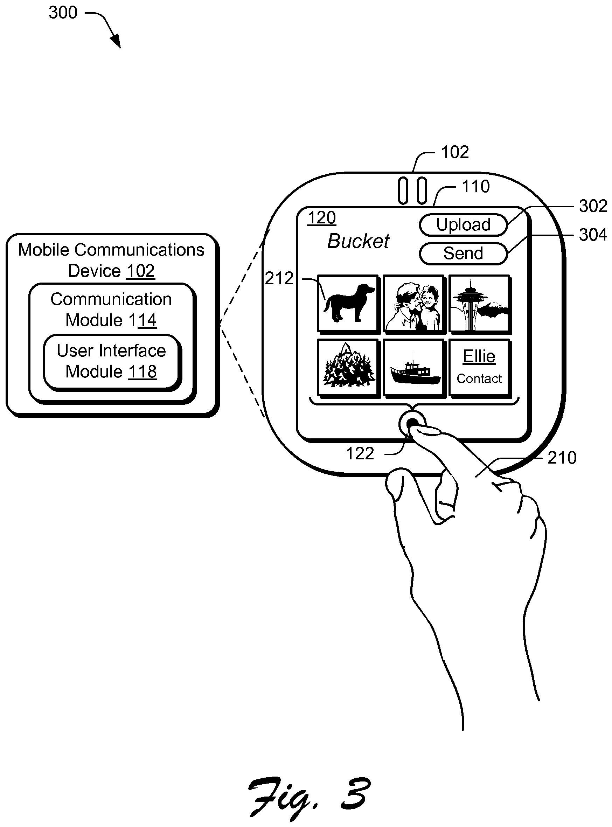

The first housing 104 includes a display device 110 that may be used to output a variety of content, such as a caller identification (ID), contacts, images (e.g., photos) as illustrated, email, multimedia messages, Internet browsing, game play, music, video and so on. In an implementation, the display device 110 is configured to function as an input device by incorporating touchscreen functionality, e.g., through capacitive, surface acoustic wave, resistive, optical, strain gauge, dispersive signals, acoustic pulse, and other touchscreen functionality. The touchscreen functionality (as well as other functionality such as track pads) may be used to detect gestures, further discussion of which may be found in relation to FIGS. 2 and 3.

The second housing 106 is illustrated as including a keyboard 112 that may also be used to provide inputs to the mobile communications device 102. Although the keyboard 112 is illustrated as a QWERTY keyboard, a variety of other examples are also contemplated, such as a keyboard that follows a traditional telephone keypad layout (e.g., a twelve key numeric pad found on basic telephones), keyboards configured for other languages (e.g., Cyrillic), and so on.

In the "open" configuration as illustrated in the example implementation 100 of FIG. 1, the first housing 104 is moved (e.g., slid) "away" from the second housing 106 using the slide 108. Other implementations are also contemplated, such as a "clamshell" configuration, "brick" configuration, and so on.

The form factor employed by the mobile communications device 102 may be suitable to support a wide variety of features. For example, the keyboard 112 is illustrated as supporting a QWERTY configuration. This form factor may be particularly convenient to a user to utilize the previously described functionality of the mobile communications device 102, such as to compose texts, play games, check email, "surf' the Internet, provide status messages for a social network, and so on.

The mobile communications device 102 is also illustrated as including a communication module 114. The communication module 114 is representative of functionality of the mobile communications device 102 to communicate via a network 116. For example, the communication module 114 may include telephone functionality to make and receive telephone calls. The communication module 114 may also include a variety of other functionality, such as to capture content, form short message service (SMS) text messages, multimedia messaging service (MMS) messages, emails, status updates to be communicated to a social network service, and so on. A user, for instance, may input a status update for communication via the network 116 to the social network service. The social network service may then publish the status update to "friends" of the user, e.g., for receipt by the friends via a computer, respective mobile communications devices, and so on. A variety of other examples are also contemplated, such as blogging, instant messaging, and so on.

The mobile communications device 102 is also illustrated as including a user interface module 118. The user interface module 118 is representative of functionality of the mobile communications device 102 to generate, manage, and/or output a user interface 120 for display on the display device 110. A variety of different techniques may be employed to generate the user interface.

For example, the user interface module 118 may configure the user interface 120 to include a portion 122 to collect a plurality of content, such as the images 124 in the user interface 120 of FIG. 1. The user interface module 118 may then expose a plurality of actions 126 that may be performed using each of the content collected in the portion 122. A variety of different actions 126 may be performed, such as to form a communication 128, form a playlist 130, form a slideshow 132, and so on. Thus, in this way content may be first collected using the portion 122 (the "bucket") and then an object (e.g., the communication, playlist, or slideshow) may be formed. This differs from conventional techniques in which the object was first formed (e.g., a playlist, a communication, and so on) and then populated with content. A variety of different techniques may be used to collect content using the portion 122, an example of which is described in relation to the following figure.

FIG. 2 illustrates a system 200 in an example implementation in which a gesture that is used to collect content in the portion 122 of the user interface 120. The illustrated system 200 shows a plurality of steps 202, 204, 206, 208 that are used to collect content in the portion 122. The mobile communication device 102 is illustrated in the first step 202 as outputting the user interface 120 having a plurality of content, which are images in this example. A user's finger 210 selects the image 212 of the dog by placing the finger 210 against the surface of the display device 110.

At the second step 204, touchscreen functionality of the mobile communications device 102 is used to detect the selection. In response, a thumbnail image 214 of the image 212 of the dog is created which follows the dragging of the user's finger 210 across the display device 210. For example, an animation may be displayed to give the appearance that the thumbnail image 210 "pops off' the image 212 of the dog. Additionally, the display of the image 212 may also be changed to indicate the selection, which is illustrated through the use of grayscale in the second step 204.

At the third step 206, the thumbnail image 214 has been dragged proximal to the portion 122 of the user interface 120 to follow the user's finger 210. In response, an animation is displayed that gives an appearance of the thumbnail image 214 being "dropped in the bucket." For example, the animation may cause the thumbnail image 214 to be rotated and scaled (e.g., shrunk). In this way, the user is informed that the content (e.g., the image 212) is being input. A variety of other examples are also contemplated.

At the fourth step 208, the display of the image 212 returns back to the original state, e.g., to match the original state in the first step 202. Additionally, a display of the portion 122 is changed to indicate that the portion contains the image. Thus, the user is informed in this instance that the portion 122 "contains" the image 122. This process may be repeated to include a wide variety of content in the portion 122 from a wide variety of applications. For example, the content included in the portion 122 may be heterogeneous (e.g., "mixed") to include music, images, movies, contacts, documents, and so on obtained from a variety of different applications. Although a drag-and-drop operation has been described for a single item of content, multiple items may also be selected (e.g., sequentially or at one time) and then dragged together. A variety of different actions may then be performed based on what content is included in the portion 122, further discussion of which may be found in relation to the following figure.

FIG. 3 illustrates a system 300 in an example implementation in which content is shown that is accepted into the portion 122. A user's hand 210 is shown as selecting the portion 120, which causes content that has been placed "in" the portion 122 to be displayed in the user interface 120.

The user interface 120 may also include options that are selectable to perform represented actions, examples of which are illustrated as upload 302 and send 304. The upload 302 option is selectable to cause content included in the portion 122 to be uploaded to a network site, such as a social network service. For example, the user interface module 118 may determine that a contact (e.g., "Ellie" in the illustrated example) has been included in the portion 122. Accordingly, the user interface module 118 may upload content that is not the contact to a network location specified in the contact "Ellie." A similar technique may also be employed to form a communication to one or multiple contacts, further discussion of which may be found in relation to the following procedures.

### Example Procedures

The following discussion describes user interface techniques that may be implemented utilizing the previously described systems and devices. Aspects of each of the procedures may be implemented in hardware, firmware, software, or a combination thereof. The procedures are shown as a set of blocks that specify operations performed by one or more devices and are not necessarily limited to the orders shown for performing the operations by the respective blocks. In portions of the following discussion, reference will be made to the environment 100 and systems 200-300 of FIGS. 1-3, respectively.

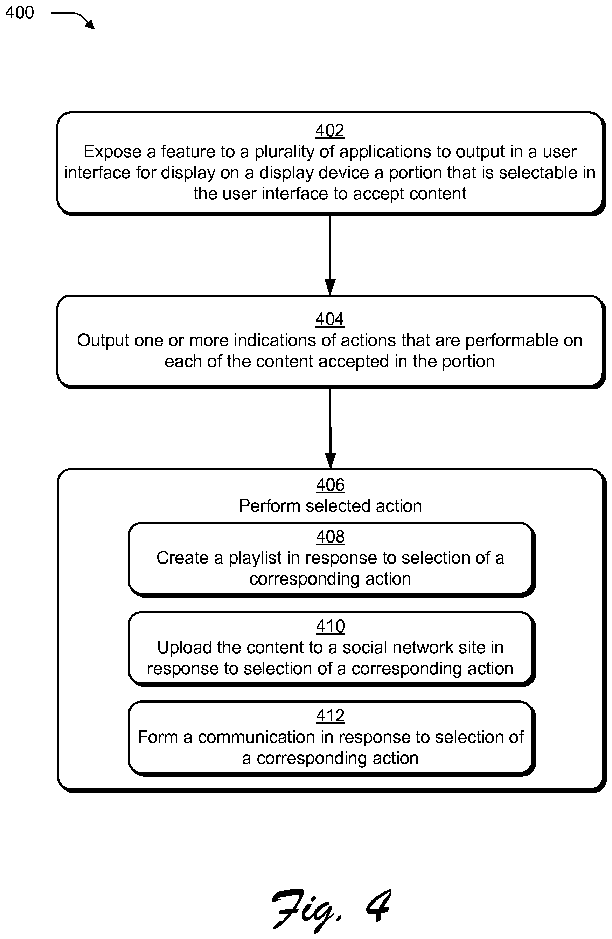

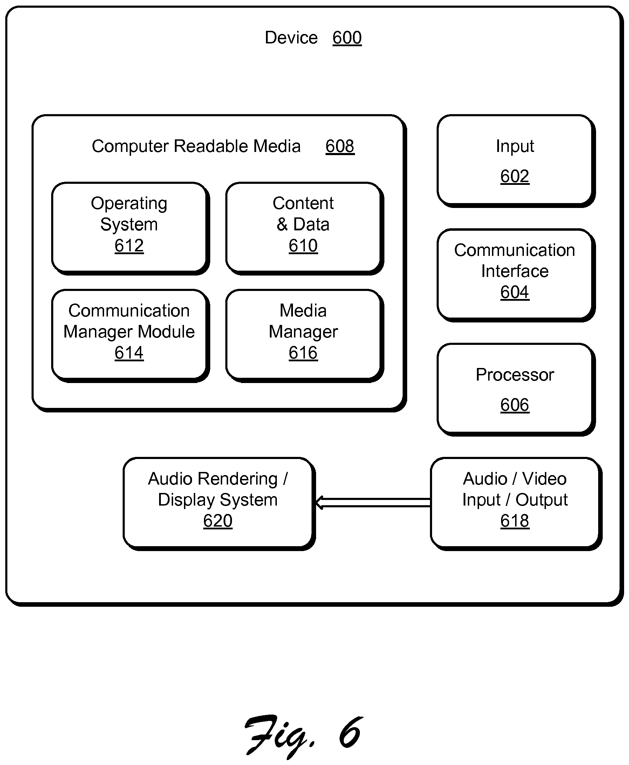

FIG. 4 depicts a procedure 400 in an example implementation in which a portion is output in a user interface that is configured to accept content and then perform an action involving each of the content. A feature is exposed to a plurality of application to output, in a user interface for display on a display device, a portion that is selectable in the user interface to accept content (block 402). For example, functionality of the media module 108 may be incorporated within an operating system that is executable on a processor of the mobile media device 104 and is storable in memory or other computer-readable storage media of the mobile communications device 104. The operating system may expose this functionality to applications that are also executed on the mobile communications device 104 via an application programming interface (API). Further discussion of an operating system may be found in relation to FIG. 6.

One or more indications of actions are output that are performable on each of the content accepted in the portion (block 404). Thus, in this example, the content is gathered and then a variety of actions are performable on the content by selecting the action (block 406). For example, a playlist may be created in response to selection of a corresponding action (block 408) "create playlist" when the portion includes content configured as media, e.g., songs, videos, and so on. In another example, the content may be uploaded to a social network site in response to selection of a corresponding action (block 410) "upload." For instance, the media module 108 may automatically (or in conjunction with manual interaction of a user) provide credentials to a social network website via the network 106 to upload content to a user's account upon selection of an "upload" action. In a further example, a communication is formed in response to selection of a corresponding action (block 412), such as an email, text message, and so on. Further discussion of communication formation may be found in relation to the following figure.

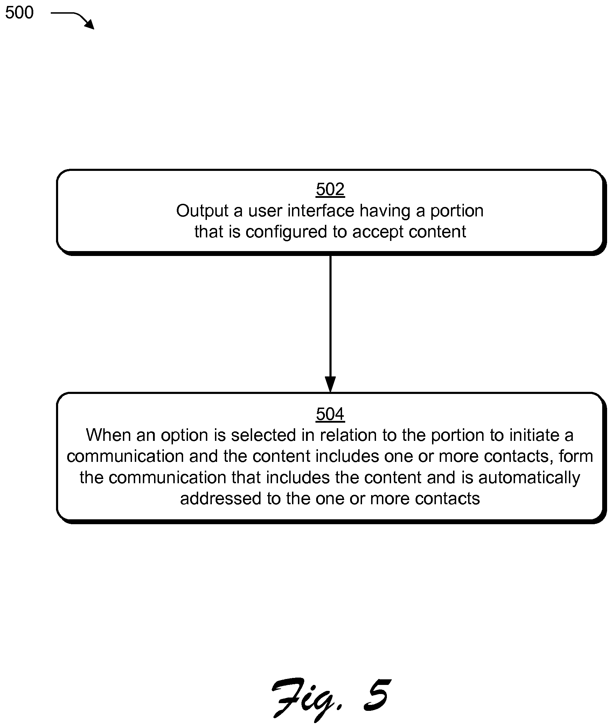

FIG. 5 depicts a procedure 500 in an example implementation in which a user interface is output having a portion that is configured to accept content and usable to automatically form a communication without further user interaction. A user interface is output that has a portion that is configured to accept content (block 502). For example, the portion 122 may accept content such as images, music, and contacts.

When an option is selected in relation to the portion to initiate a communication and the content includes one or more contacts, the communication is formed to include the content and is automatically addressed to the one or more contacts (block 504). For example, the media module 108 may identify which of the content accepted via the portion 122 includes relevant contact information, e.g., a telephone number, email address, and so on. Therefore, when an option is selected (e.g., a representation of an action "email") the communication is formed and populated with the relevant contact information of each of the contacts accepted by the portion 122 automatically and without further user interaction. A variety of other examples are also contemplated, such as formation of a SMS, MMS, and so on.

### Example Device

FIG. 6 illustrates various components of an example device 600 that can be implemented in various embodiments as any type of a mobile device to implement embodiments of devices, features, and systems for mobile communications. For example, device 600 can be implemented as any of the mobile communications devices 102 described with reference to respective FIGS. 1-3. Device 600 can also be implemented to access a network-based service, such as a social network service as previously described.

Device 600 includes input 602 that may include Internet Protocol (IP) inputs as well as other input devices, such as the keyboard 112 of FIG. 1. Device 600 further includes communication interface 604 that can be implemented as any one or more of a wireless interface, any type of network interface, and as any other type of communication interface. A network interface provides a connection between device 600 and a communication network by which other electronic and computing devices can communicate data with device 600. A wireless interface enables device 600 to operate as a mobile device for wireless communications.

Device 600 also includes one or more processors 606 (e.g., any of microprocessors, controllers, and the like) which process various computer-executable instructions to control the operation of device 600 and to communicate with other electronic devices. Device 600 can be implemented with computer-readable media 608, such as one or more memory components, examples of which include random access memory (RAM) and non-volatile memory (e.g., any one or more of a read-only memory (ROM), flash memory, EPROM, EEPROM, etc.).

Computer-readable media 608 provides data storage to store content and data 610, as well as device applications and any other types of information and/or data related to operational aspects of device 600. For example, an operating system 612 can be maintained as a computer application with the computer-readable media 608 and executed on processor 606. Device applications can also include a communication manager module 614 (which may be used to provide telephonic functionality) and a media manager 616.

Device 600 also includes an audio and/or video output 618 that provides audio and/or video data to an audio rendering and/or display system 620. The audio rendering and/or display system 620 can be implemented as integrated component(s) of the example device 600, and can include any components that process, display, and/or otherwise render audio, video, and image data. Device 600 can also be implemented to provide a user tactile feedback, such as vibrate and haptics.

Generally, the blocks may be representative of modules that are configured to provide represented functionality. Further, any of the functions described herein can be implemented using software, firmware (e.g., fixed logic circuitry), manual processing, or a combination of these implementations. The terms "module," "functionality," and "logic" as used herein generally represent software, firmware, hardware or a combination thereof. In the case of a software implementation, the module, functionality, or logic represents program code that performs specified tasks when executed on a processor (e.g., CPU or CPUs). The program code can be stored in one or more computer readable memory devices. The features of the techniques described above are platform-independent, meaning that the techniques may be implemented on a variety of commercial computing platforms having a variety of processors.

### Conclusion

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A method (400; 500) implemented by a mobile communications device (102, 600), the method (500) comprising:
outputting (402; 502) a user interface (120) having a portion (122) that is configured as a bucket to accept content items (610) via one or more drag-and-drop operations involving a gesture detected through interaction with a display device (110) of the mobile communications device (102, 600) using touchscreen functionality, wherein thumbnail images (214) of the content items are displayed in the user interface (120) as following the gesture, the content items accepted by the portion remaining hidden from view, and wherein the portion (122) is provided by an operating system (612) and exposed (402) to a plurality of applications such that the content items (610) accepted by the portion (122) persist during navigation between the applications; **characterized in that** in response to a selection of the portion, outputting (404) one or more indications of actions (126; 408-412) that are performable on each of the content items accepted in the portion, wherein a single selection of the indication of the action results in performance (406) of the action on each of the content items accepted in the portion.

2. A method (500) as described in claim 1, wherein the actions include forming (128; 412; 504) a communication, wherein the communication is an email and the content items include at least one email address that is used to automatically address the communication.

3. A method (500) as described in claim 1, wherein the actions include forming (128; 412; 504) a communication, wherein the communication is a multimedia messaging service communication and the content items include at least one telephone number that is used to automatically address the communication.

4. A method (500) as described in claim 1, wherein the actions include forming (128; 412; 504) a communication, wherein the communication is an upload to a social network service and the content items include at least one network address that is used to automatically address the communication.

5. A method (500) as described in claim 1, wherein:
when the thumbnail image (214) is displayed proximally to the portion (122), an animation is displayed in the user interface (120) to show acceptance of the thumbnail image (214) by the portion (122).

6. A method (500) as described in claim 5, wherein the animation involves rotation and scaling of the thumbnail image (214).

7. A method (500) as described in any one of the preceding claims, wherein a display state of the portion (122) changes when the content items (610) have been accepted by the portion (122) to indicate the acceptance.

8. A method (500) as described in claim 1, wherein the actions include creation (130; 408) of a playlist and initiation (132) of a slideshow.

9. A computer readable medium (608) having computer-executable instructions stored thereon which, when executed on a processor (606), cause the processor (606) to perform the method (400; 500) of any one of the preceding claims.

10. A mobile communications device (102, 600) comprising:
a display device (110, 620);
a processor (606); and
memory configured to maintain a plurality of applications and an operating system (612) that are executable on the processor (606), the operating system (612) being configured to perform the method of any of claims 1-8.

## Patentansprüche

1. Verfahren (400; 500), das durch eine mobile Kommunikationsvorrichtung (102, 600) implementiert ist, wobei das Verfahren (500) umfasst:
Ausgeben (402; 502) einer Anwenderschnittstelle (120) mit einem Abschnitt (122), der als ein Kübel konfiguriert ist, um Inhaltsgegenstände (610) mittels eines oder mehrerer Zieh- und Ablege-Vorgänge aufzunehmen, die eine Geste involvieren, die durch Interaktion mit einer Anzeigevorrichtung (110) der mobilen Kommunikationsvorrichtung (102, 600) unter Verwendung einer Berührungsbildschirmfunktionalität erfasst wird, wobei Miniaturansichtsbilder (214) der Inhaltsgegenstände in der Anwenderschnittstelle (120) der Geste folgend angezeigt sind, die Inhaltsgegenstände, die im Abschnitt aufgenommen sind, vor einer Ansicht verborgen bleiben, und wobei der Abschnitt (122) durch ein Betriebssystem (612) bereitgestellt ist und mehreren Anwendungen ausgesetzt (402) ist, sodass die Inhaltsgegenstände (610), die im Abschnitt (122) aufgenommen sind, während einer Navigation zwischen den Anwendungen weiterbestehen; **gekennzeichnet durch** in Reaktion auf eine Auswahl des Abschnitts, Ausgeben (404) einer oder mehrerer Anzeigen von Aktionen (126; 408-412), die an jedem der im Abschnitt aufgenommenen Inhaltsgegenstände ausführbar sind, wobei eine einzelne Auswahl der Anzeige der Aktion in einer Ausführung (406) der Aktion an jedem der im Abschnitt aufgenommenen Inhaltsgegenstände resultiert.

2. Verfahren (500) nach Anspruch 1, wobei die Aktionen ein Gestalten (128; 412; 504) einer Kommunikation enthalten, wobei die Kommunikation eine E-Mail ist und die Inhaltsgegenstände zumindest eine E-Mail-Adresse enthalten, die verwendet wird, um die Kommunikation automatisch zu adressieren.

3. Verfahren (500) nach Anspruch 1, wobei die Aktionen ein Gestalten (128; 412; 504) einer Kommunikation enthalten, wobei die Kommunikation eine Multimedia-Nachrichtendienst-Kommunikation ist und die Inhaltsgegenstände zumindest eine Telefonnummer enthalten, die verwendet wird, um die Kommunikation automatisch zu adressieren.

4. Verfahren (500) nach Anspruch 1, wobei die Aktionen ein Gestalten (128; 412; 504) einer Kommunikation enthalten, wobei die Kommunikation ein Upload zu einem sozialen Netzdienst ist und die Inhaltsgegenstände zumindest eine Netzwerkadresse enthalten, die verwendet wird, um die Kommunikation automatisch zu adressieren.

5. Verfahren (500) nach Anspruch 1, wobei:
wenn das Miniaturansichtsbild (214) nahe dem Abschnitt (122) angezeigt ist, eine Animation in der Anwenderschnittstelle (120) angezeigt ist, um eine Aufnahme des Miniaturansichtsbilds (214) durch den Abschnitt (122) zu zeigen.

6. Verfahren (500) nach Anspruch 5, wobei die Animation ein Drehen und Skalieren des Miniaturansichtsbilds (214) beinhaltet.

7. Verfahren (500) nach einem der vorangehenden Ansprüche, wobei sich ein Anzeigezustand des Abschnitts (122) ändert, wenn die Inhaltsgegenstände (610) durch den Abschnitt (122) aufgenommen wurden, um die Aufnahme anzuzeigen.

8. Verfahren (500) nach Anspruch 1, wobei die Aktionen eine Erstellung (130; 408) einer Wiedergabeliste und Initialisierung (132) einer Diavorführung enthalten.

9. Computerlesbares Medium (608) mit darauf gespeicherten computerausführbaren Anweisungen, die, wenn auf einem Prozessor (606) ausgeführt, den Prozessor (606) veranlassen, das Verfahren (400; 500) nach einem der vorangehenden Ansprüche durchzuführen.

10. Mobile Kommunikationsvorrichtung (102, 600), umfassend:
eine Anzeigevorrichtung (110, 620);
einen Prozessor (606); und
einen Speicher, der ausgelegt ist, mehrere Anwendungen zu verwalten, und ein Betriebssystem (612), die auf dem Prozessor (606) ausführbar sind, wobei das Betriebssystem (612) ausgelegt ist, das Verfahren nach einem der Ansprüche 1-8 durchzuführen.

## Revendications

1. Procédé (400; 500) mis en oeuvre par un dispositif de communication mobile (102, 600), le procédé (500) comprenant:
la fourniture en sortie (402; 502) d'une interface utilisateur (120) ayant une portion (122) qui est configurée comme un baquet pour accepter des éléments de contenu (610) par l'intermédiaire d'une ou plusieurs opérations de glisser-déposer impliquant un geste détecté par interaction avec un dispositif d'affichage (110) du dispositif de communication mobile (102, 600) en utilisant une fonctionnalité d'écran tactile, dans lequel des images miniatures (214) des éléments de contenu sont affichées dans l'interface utilisateur (120) comme suite du geste, les éléments de contenu acceptés par la portion restant cachés à la vue, et dans lequel la portion (122) est fournie par un système d'exploitation (612) et exposée (402) à une pluralité d'applications de manière que les éléments de contenu (610) acceptés par la portion (122) persistent durant la navigation entre les applications; **caractérisé en ce que**
en réponse à une sélection de la portion, la fourniture en sortie (404) d'une ou plusieurs indications d'actions (126; 408-412) qui peuvent être réalisées sur chacun des éléments de contenu acceptés dans la portion, dans lequel une unique sélection de l'indication de l'action entraîne la réalisation (406) de l'action sur chacun des éléments de contenu acceptés dans la portion.

2. Procédé (500) selon la revendication 1, dans lequel les actions incluent la formation (128; 412; 504) d'une communication, dans lequel la communication est un courrier électronique et les éléments de contenu incluent au moins une adresse de courrier électronique qui est utilisée pour adresser automatiquement la communication.

3. Procédé (500) selon la revendication 1, dans lequel les actions incluent la formation (128; 412; 504) d'une communication, dans lequel la communication est une communication de service de messagerie multimédia et les éléments de contenu incluent au moins un numéro de téléphone qui est utilisé pour adresser automatiquement la communication.

4. Procédé (500) selon la revendication 1, dans lequel les actions incluent la formation (128; 412; 504) d'une communication, dans lequel la communication est un téléchargement vers un service de réseau social et les éléments de contenu incluent au moins une adresse de réseau qui est utilisé pour adresser automatiquement la communication.

5. Procédé (500) selon la revendication 1, dans lequel:
quand l'image miniature (214) est affichée de manière proximale à la portion (122), une animation est affichée dans l'interface utilisateur (120) pour montrer l'acceptation de l'image miniature (214) par la portion (122).

6. Procédé (500) selon la revendication 5, dans lequel l'animation implique une rotation et une mise à l'échelle de l'image miniature (214).

7. Procédé (500) selon l'une quelconque des revendications précédentes, dans lequel un état d'affichage de la portion (122) change quand les éléments de contenu (610) ont été acceptés par la portion (122) pour indiquer l'acceptation.

8. Procédé (500) selon la revendication 1, dans lequel les actions incluent la création (130; 408) d'une liste de lecture et le lancement (132) d'un diaporama.

9. Support lisible par ordinateur (608) ayant des instructions exécutables par ordinateur stockées sur celui-ci qui, quand elles sont exécutées sur un processeur (606), amènent le processeur (606) à réaliser le procédé (400; 500) selon l'une quelconque des revendications précédentes.

10. Dispositif de communication mobile (102, 600) comprenant:
un dispositif d'affichage (110, 620);
un processeur (606); et
une mémoire configurée pour maintenir une pluralité d'applications et un système d'exploitation (612) qui sont exécutables sur le processeur (606), le système d'exploitation (612) étant configuré pour réaliser le procédé selon l'une quelconque des revendications 1 à 8.
